# EUROPÄISCHE PATENTSCHRIFT

(11) **EP 0 940 322 B1**
(45) Veröffentlichungstag und Bekanntmachung des Hinweises auf die Patenterteilung: **04.09.2002**
(21) Anmeldenummer: 99101608.0
(22) Anmeldetag: 03.02.1999
(51) Int. Cl.: B62D 25/08, B62D 21/11, B62D 21/12, B60G 9/00

(54) **Fahrgestell eines schweren Nutzfahrzeuges**
Chassis for a heavy-duty utility vehicle
Chassis pour véhicule utilitaire lourd

(30) Priorität: 04.03.1998 DE 19809214
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ulrich, Dr.-Ing., 81245 München (DE); Nickels, Thomas, 81541 München (DE); Hintereder, Jürgen, Dipl-Ing. (FH), 85586 Poing (DE); Neukam, Michael, Dipl.-Ing. (TU), 82110 Germering (DE); Lutsch, Helmar, Dipl.-Ing., 81927 München (DE)

(56) Entgegenhaltungen:
- EP-A- 0 636 531
- EP-A- 0 678 405
- DE-A- 4 226 500
- DE-A- 19 624 242
- US-A- 4 168 086
- US-A- 5 641 181

## Beschreibung

Die Erfindung betrifft ein Fahrgestell eines schweren Nutzfahrzeugs mit Merkmalen gemäß dem Oberbegriff des Anspruchs 1.

Die Erfindung geht aus von der DE 196 24 242 A1.

Des weiteren ist aus der EP 0636531 A2 eine Hinterachsaufhängung eines Personenkraftwagen bekannt, bei der die starre Hinterachse über je Achsseite ein Dämpferbein gegenüber einem Bodenblechteil abgestützt ist. Außerdem ist zur Querführung der starren Hinterachse ein Panhardstab vorgesehen.

Ferner beschreibt die DE 21 42 079 A1 eine luft- oder schraubengefederte Verbundlenker-Vorderachse mit einem Starrachskörper und zwei fest mit diesem verbundenen Längslenkern. Zur Querführung ist ein Panhardstab vorgesehen, der einenendes an einem Längslenker und andernendes an der gefederten Masse des Fahrzeugs angelenkt ist.

Demgegenüber ist es Aufgabe der Erfindung, innerhalb eines Fahrgestells eines schweren Nutzfahrzeugs die Aufhängung und Führung einer Starrachse einschließlich Federung und Dämpfung auf möglichst platzsparende Weise darzustellen.

Diese Aufgabe ist bei einem Fahrgestell der gattungsgemäßen Art erfindungsgemäß durch die im Anspruch 1 angegebenen Merkmale gelöst.

Vorteilhafte Ausgestaltungen und Weiterbildungen sowie Anwendungen der Erfindung sind in den Unteransprüchen angegeben.

Das Vorsehen von Feder-Dämpfer-Beinen in einem schweren Nutzfahrzeug stellt ein Novum dar, weil solche Federbeine bisher nur in hochwertigen Personenkraftwagen zur Anwendung kamen. Das Anschließen der Feder-Dämpfer-Beine jeweils oben an einem am Fahrzeugrahmen befestigten Federbeinhalter und unten an einer Anlenkstelle am Starrachskörper, insbesondere so weit wie möglich außen im Sinne einer größtmöglichen Federspur mit von vorne gesehen gepfeilter Anordnung der Federbeine, ergibt einen hohen Fahr- und Federungskomfort. Besonders vorteilhaft kommt dies zum Tragen, wenn die Starrachse nach Art einer selbststabilisierenden Verbundlenkerachse ausgebildet ist, mit Merkmalen, wie im Anspruch 2 angegeben. Das erfindungsgemäße Heranziehen und Ausgestalten eines der beiden Federbeinhalter als Anlenk-, Halte- und Abstützorgan für den Panhardstab hilft Kosten senken und erspart einen ansonsten für diesen Zweck notwendigen eigenen Lagerbock an einer anderen Stelle des Rahmens. Dies gilt gleichermaßen für die gegenüberliegende Anlenkstelle des Panhardstabes an einem der beiden achsführenden Längslenker.

Nachstehend ist die Erfindung anhand der Zeichnung und darin aufgezeigter Beispiele in Verbindung mit einer ebenso neuartigen; nach Art einer selbststabilisierenden Verbundlenkerachse konstruierten Starrachse näher erläutert. In der Zeichnung zeigen:

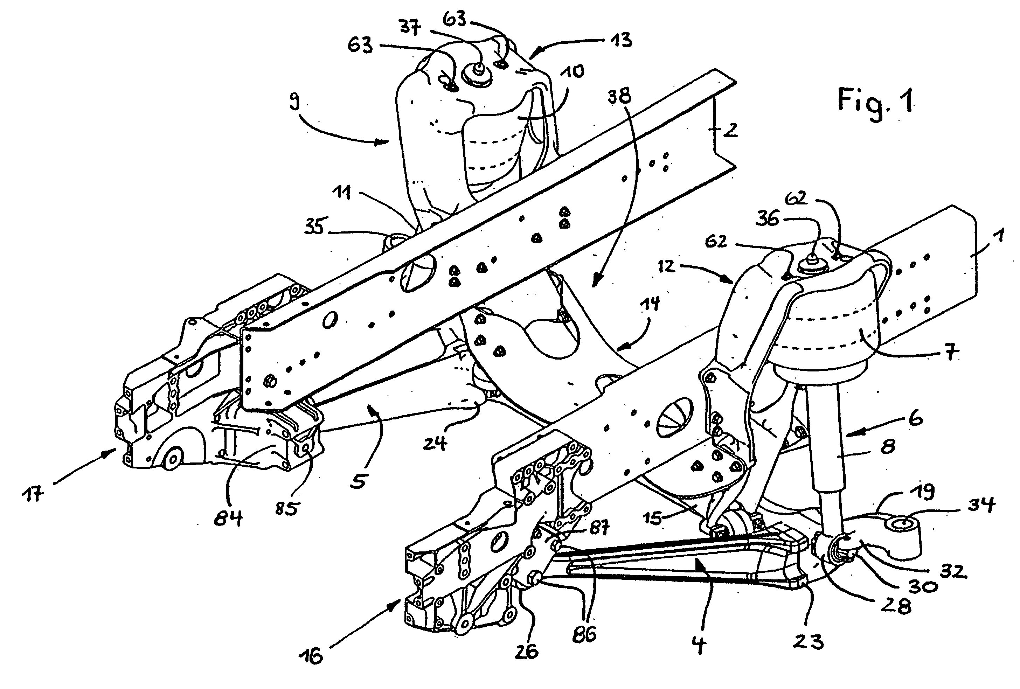

- Fig. 1: perspektivisch den vorderen Endbereich des Fahrgestells eines Frontlenker-Lastkraftwagen (als Beispiel eines schweren Nutzfahrzeuges) mit der erfindungsgemäßen Starrachse samt Aufhängung, Federung und Dämpfung,

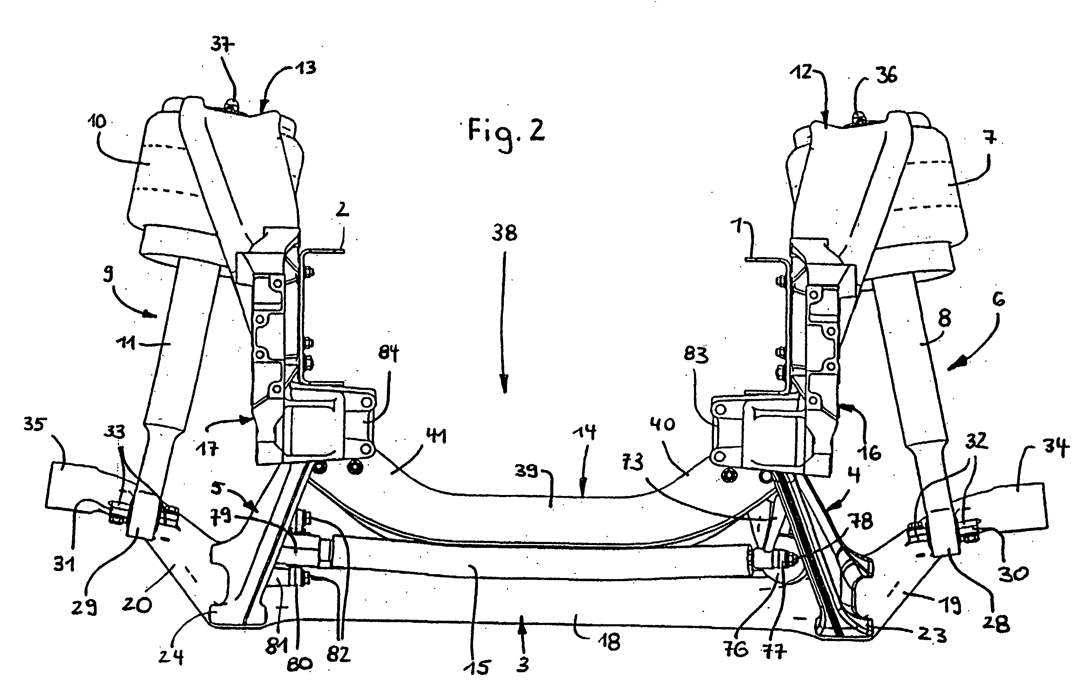

- Fig. 2: den Fahrgestellbereich gemäß Fig. 1 in Ansicht von vorn,

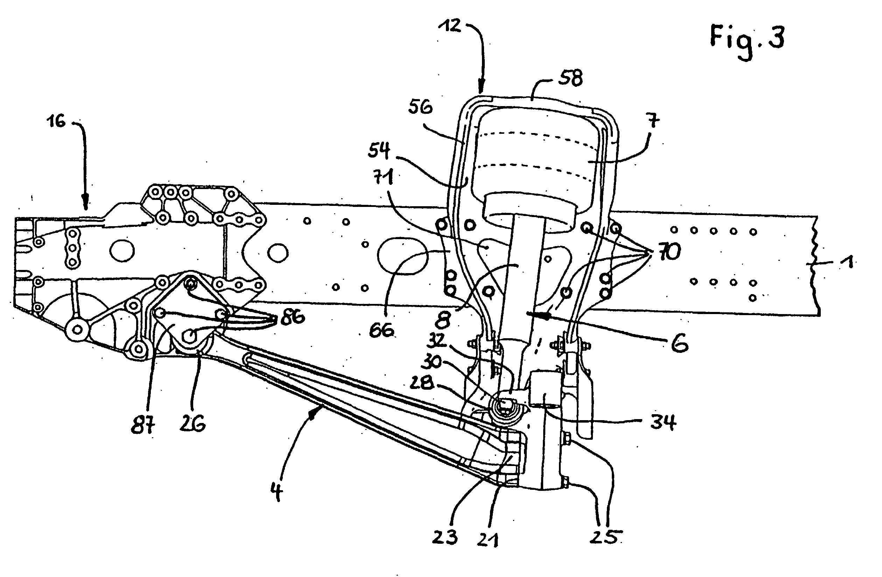

- Fig. 3: den Fahrgestellbereich gemäß Fig. 1 in Seitenansicht,

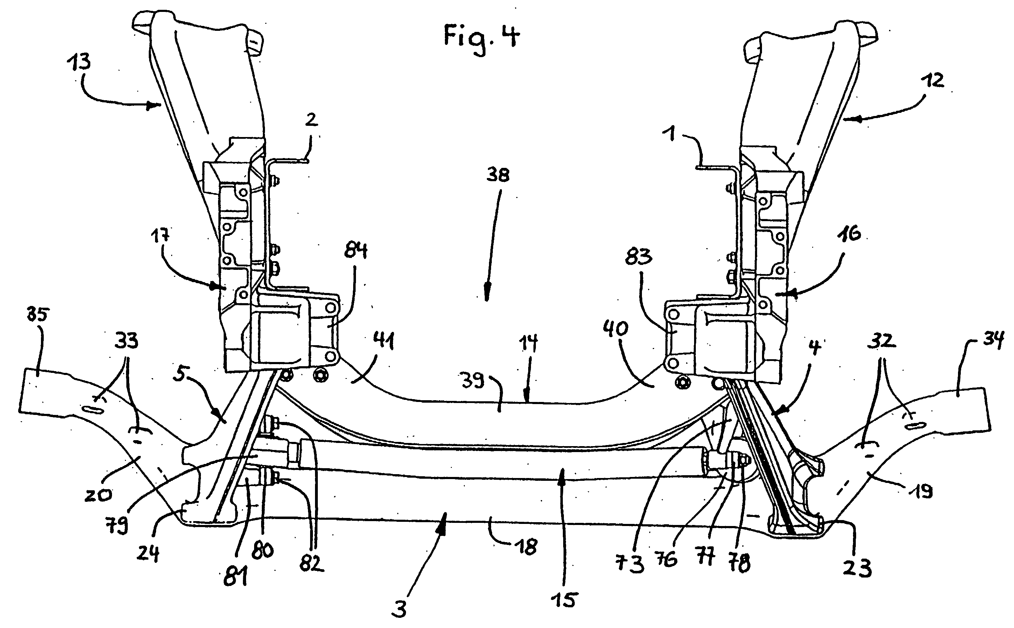

- Fig. 4: die Darstellung gemäß Fig. 2 ohne Federbeine,

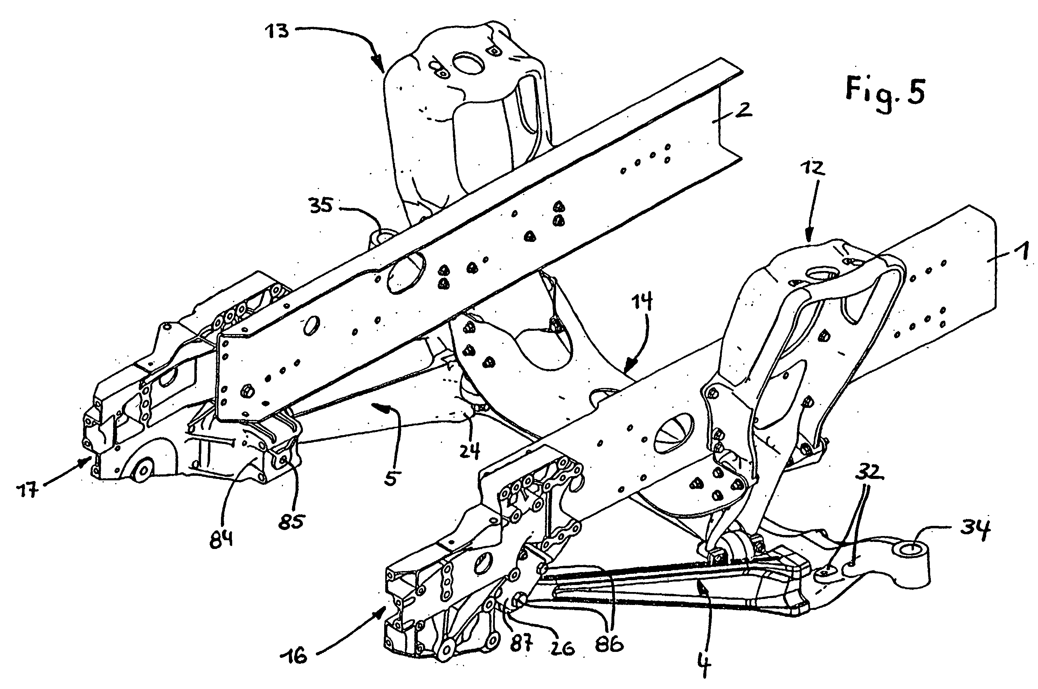

- Fig. 5: die Darstellung gemäß Fig. 1 ohne Federbeine,

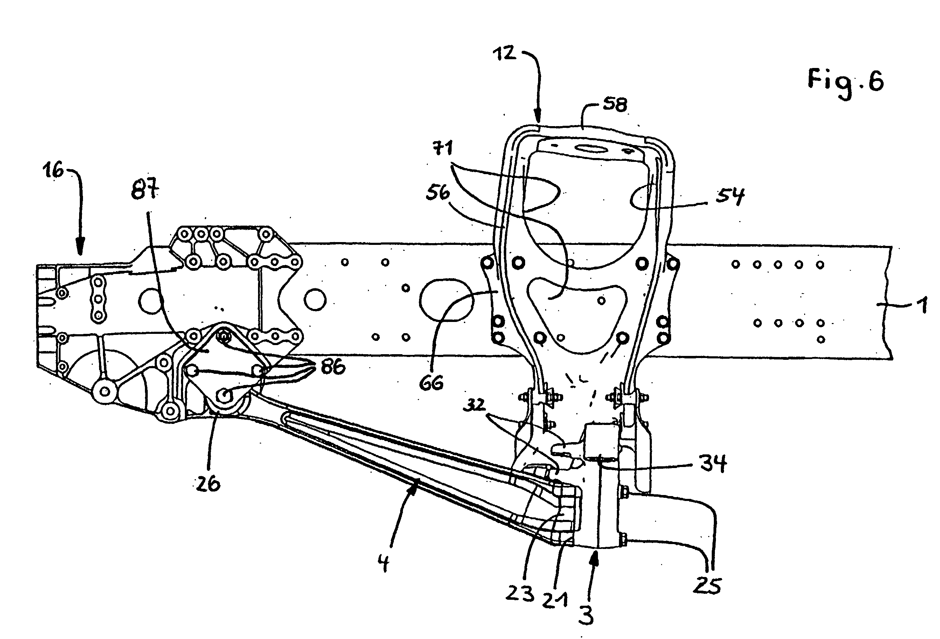

- Fig. 6: die Darstellung gemäß Fig. 3 ohne Federbeine,

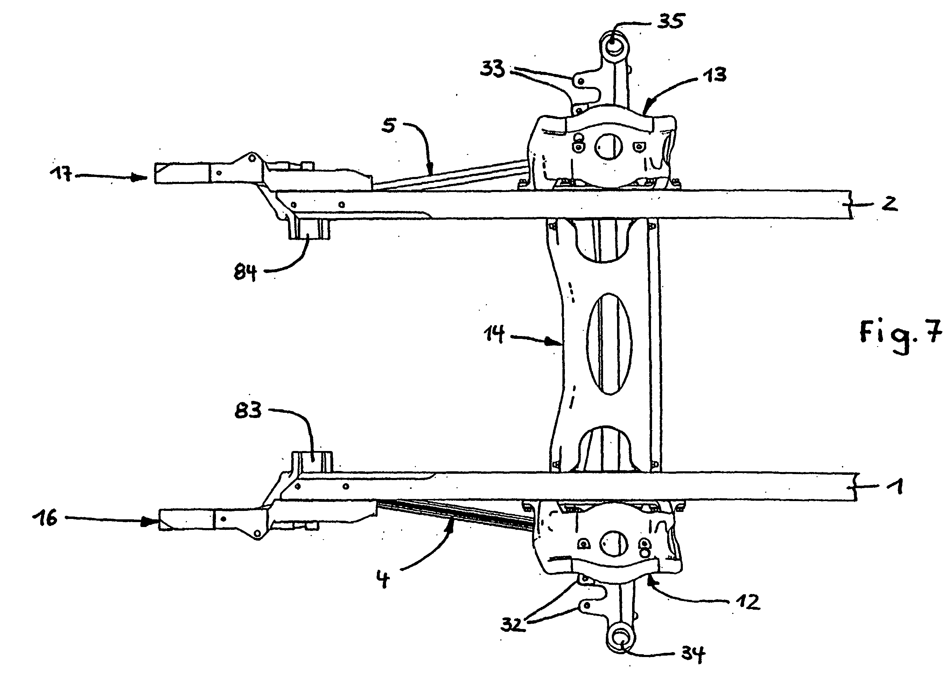

- Fig. 7: die Darstellung gemäß Fig. 4 in Draufsicht ohne Panhardstab,

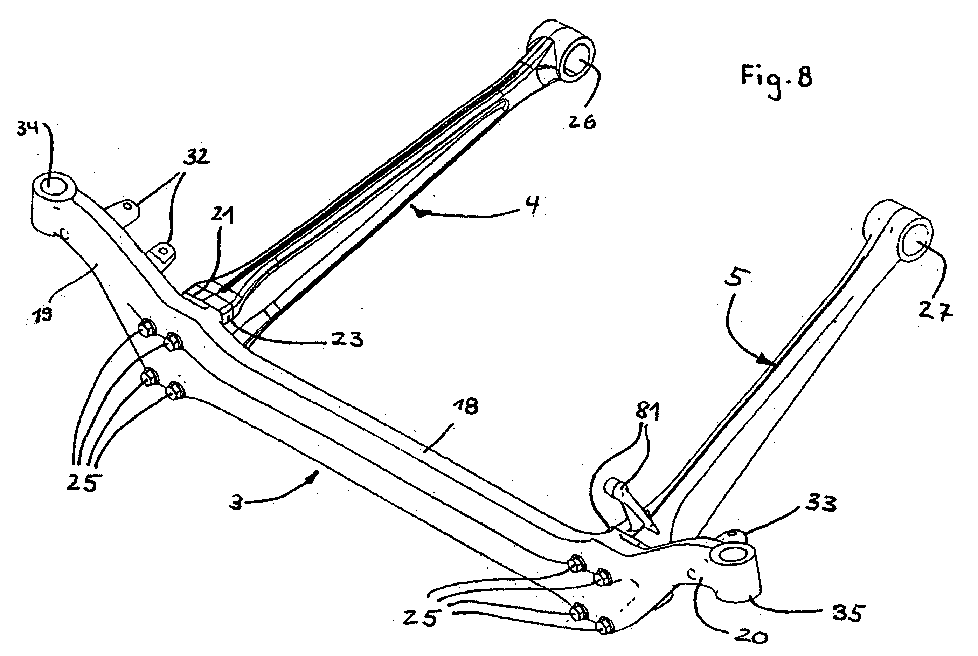

- Fig. 8: den Starrachskörper-Längslenker-Verbund aus den Fig. 1 bis 7 in perspektivischer Alleindarstellung,

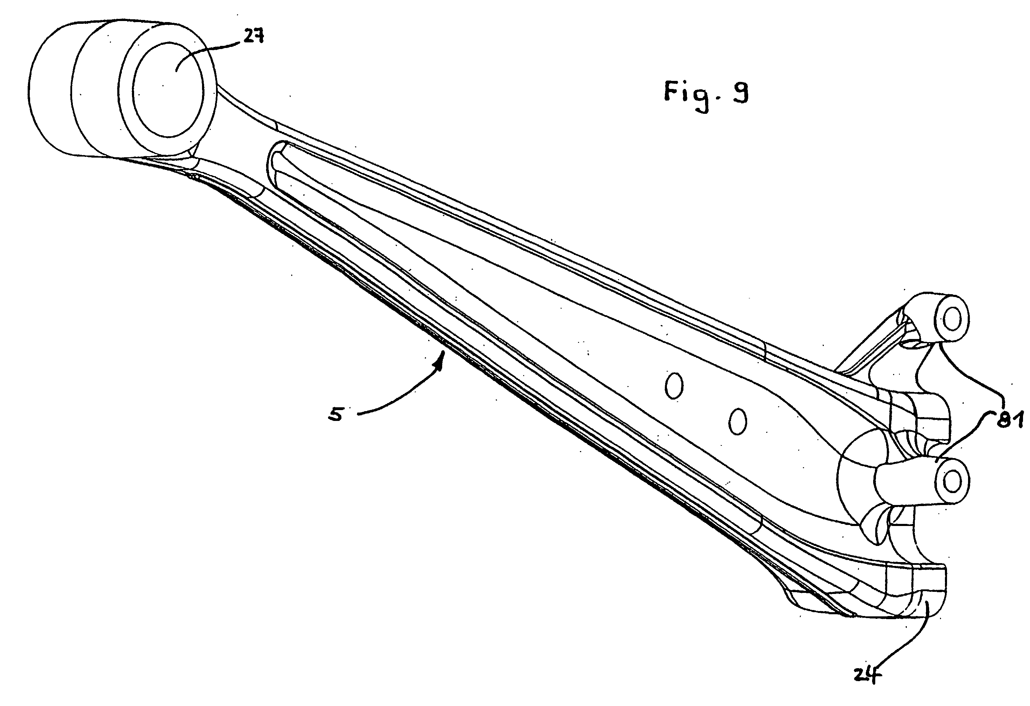

- Fig. 9: einen Längslenker aus dem Starrachskörper-Längslenker-Verbund gemäß Fig. 8 in perspektivischer Alleindarstellung,

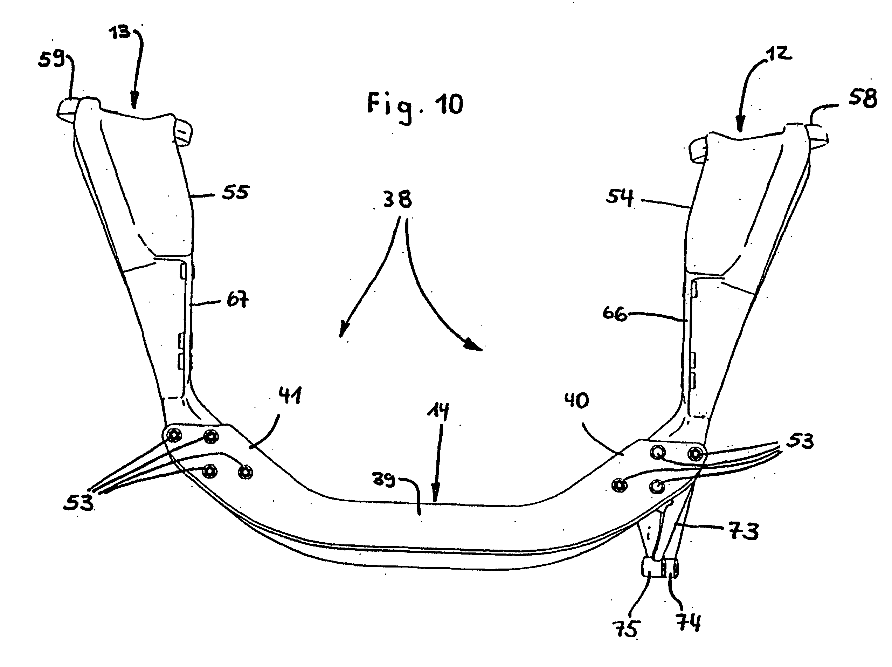

- Fig. 10: den Querträger aus Fig. 1 bis 7 in vorderansichtiger Alleindarstellung,

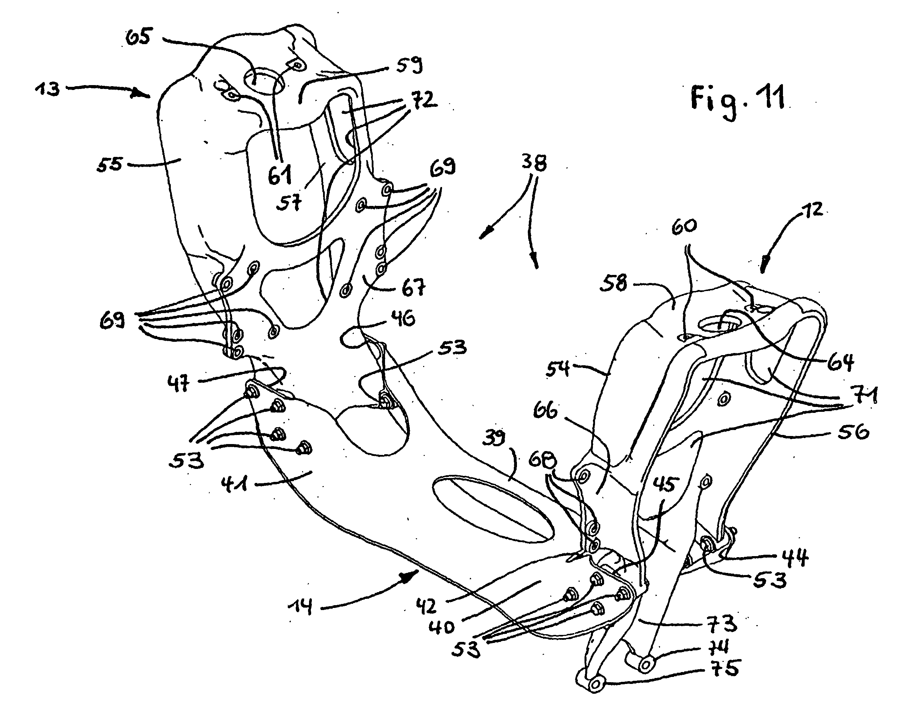

- Fig. 11: den Querträger aus Fig. 1 bis 7 in perspektivischer Alleindarstellung,

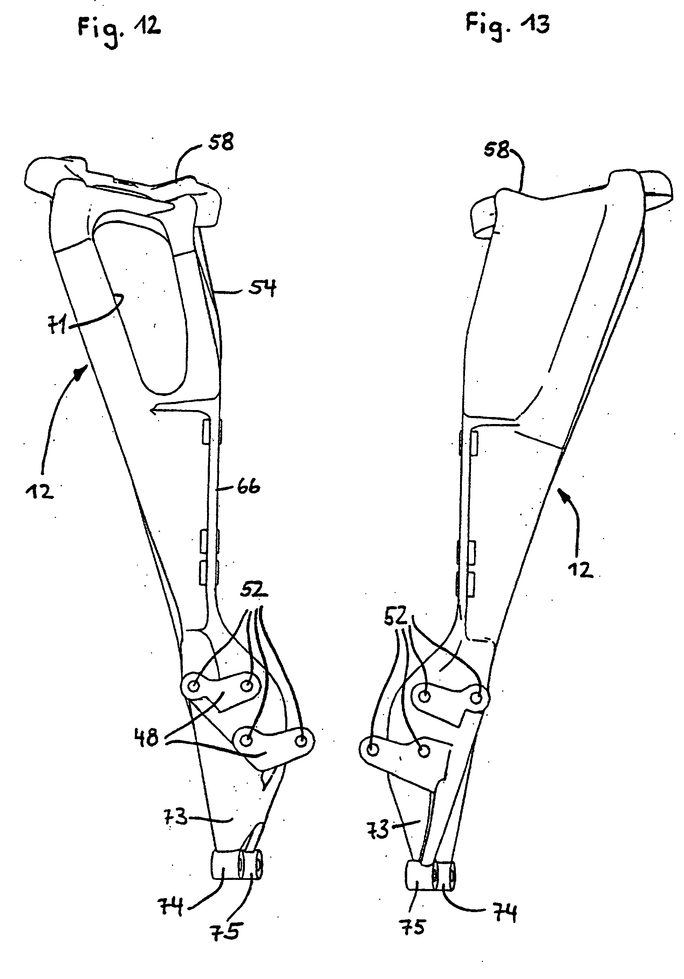

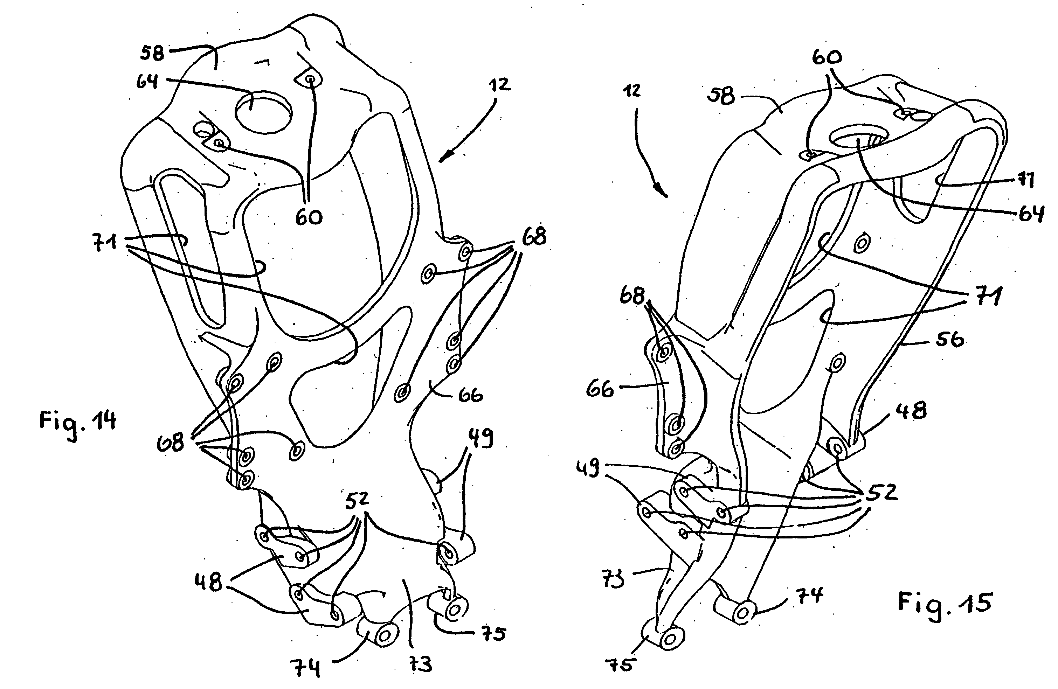

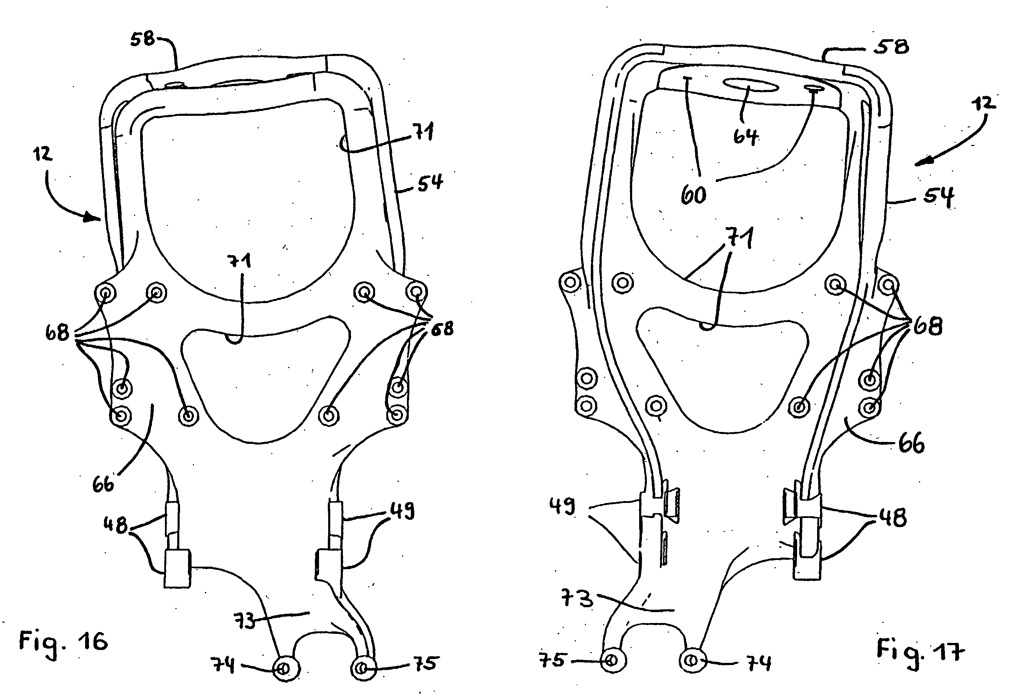

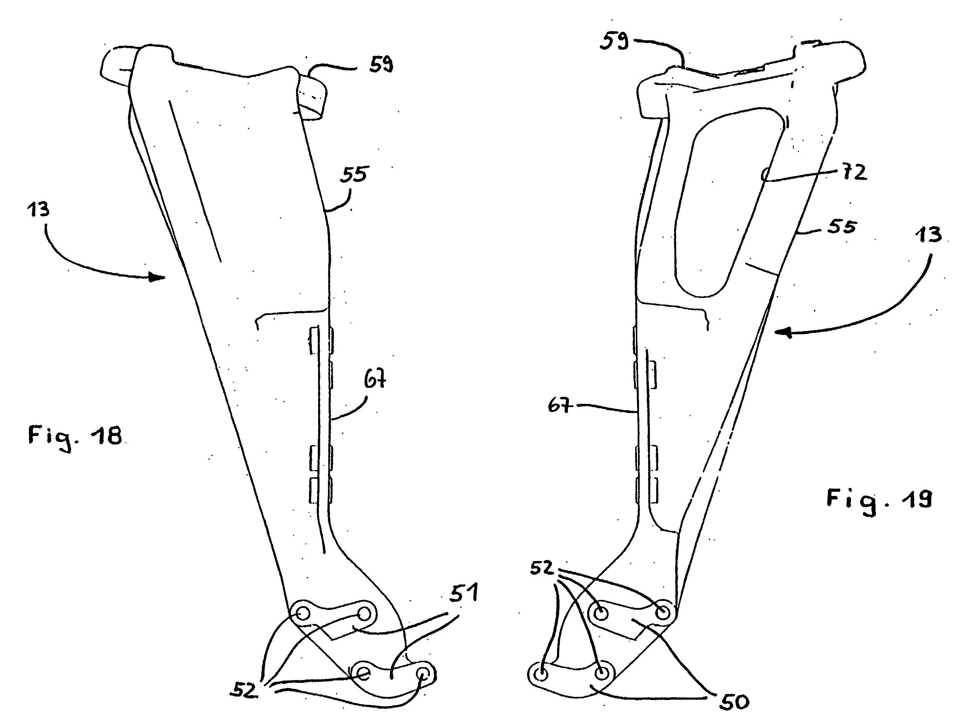

- Fig. 12 bis 17: je eine unterschiedliche Ansicht des einen der beiden Federbeinhalter, dem die Zusatzfunktion, eine Anlenkstelle für den Panhardstab zu bilden, aufgeprägt ist,

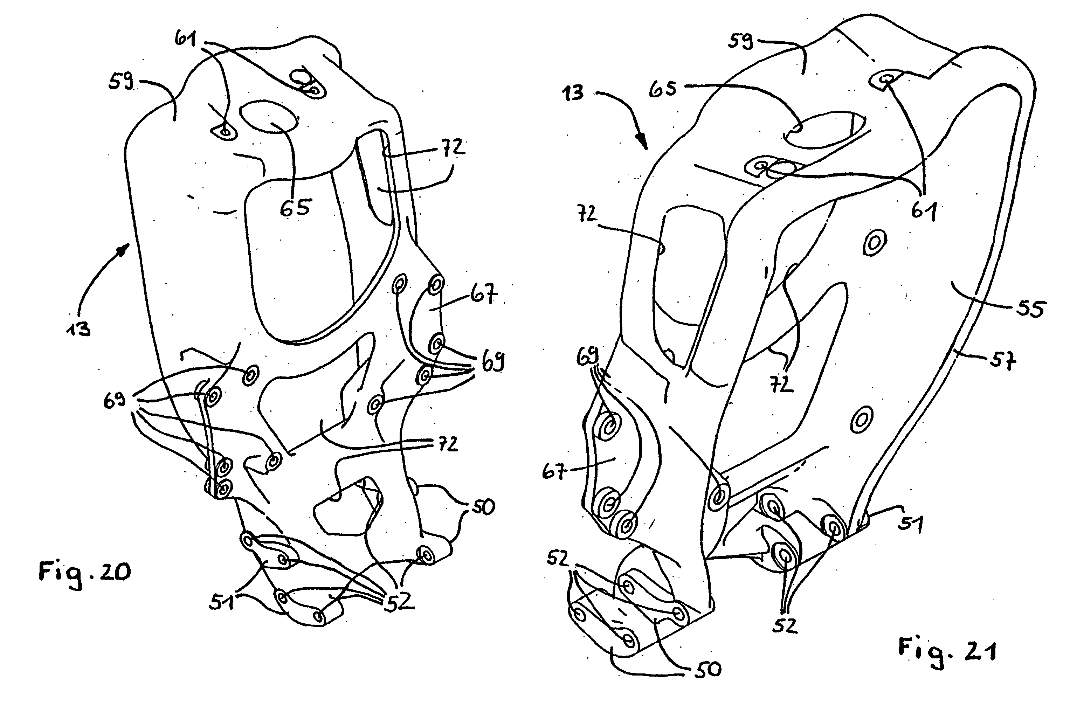

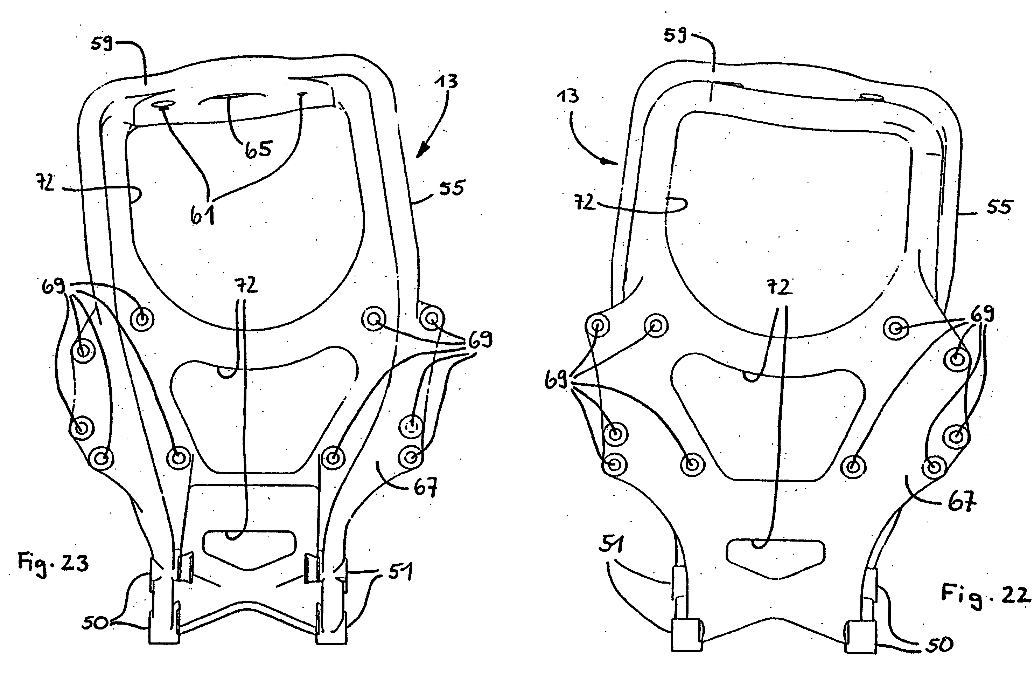

- Fig. 18 bis 23: je eine unterschiedliche Ansicht des anderen der beiden Federbeinhalter.

Das erfindungsgemäße Fahrgestell ist Bestandteil eines schweren Nutzfahrzeuges, bei dem es sich um einen Lastkraftwagen, insbesondere der Frontlenker-Bauart mit kippbarem Fahrerhaus, mit An- und Aufbauten der verschiedensten Art, auch solche für Spezialeinsatzzwecke, eine Sattelzugmaschine oder um einen Omnibus handeln kann. Die Erfindung kann generell in Verbindung mit einer Starrachse zur Anwendung kommen, bei der es sich um eine Vorderachse, Nachlaufachse oder Vorlaufachse mit lenkbaren oder nicht-lenkbaren Rädern handeln kann. In der Zeichnung ist als Beispiel für die erfindungsgemäße Starrachse eine Vorderachse aufgezeigt. Vom Fahrgestell sind in der Zeichnung als Teile des Rahmens dessen beide Längsträger mit 1 und 2 bezeichnet.

Die dargestellte Starrachse besteht einschließlich aller Aufhängungs-, Federungs- und Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem linken Federbeinhalter 12 und rechten Federbeinhalter 13, einer Quertraverse 14 und einem Panhardstab 15.

In der Zeichnung sind ein linker Multifunktionslagerschild mit 16 und ein rechter Multifunktionslagerschild mit 17 bezeichnet. Jeder derselben ist außen an einem Rahmen-Längsträger 1 bzw. 2 befestigt und dient zur rahmenseitigen Anlenkung der erfindungsgemäßen Starrachse und im vorliegenden Beispiel darüber hinaus auch als Halte-, Stütz- und Lagerorgan für eine größere Anzahl anzubauender Fahrzeugteile.

Die erfindungsgemäße Starrachse bringt ihre Vorteile dann besonders zur Geltung, wenn sie - wie dargestellt - nach Art einer selbststabilisierenden Verbundlenkerachse ausgebildet ist. In diesem Fall ist die Starrachse grundsätzlich derart konstruiert, daß zu ihrer Querführung nur der Panhardstab 15 notwendig ist und sie ohne den bisher bei schweren Nutzfahrzeugen zur Beschränkung des Wankens notwendigen U-förmigen Stabilisator auskommt, aber dessen Funktion einem Bauteilverbund aufgeprägt ist, der sich aus dem Starrachskörper 3 und den beiden an diesem befestigten Längslenkern 4, 5 zusammengesetzt. Dieser Zweckbestimmung und Funktion gehorchend ist der Starrachskörper 3 in einem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt - nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torsionsfähigkeit auf den jeweiligen fahrzeugspezifischen Anwendungsfall abgestimmt. Am Übergangsbereich zwischen geradem Mittelbereich 18 und jedem beiderseits desselben anschließenden, im dargestellten Beispiel hochgekröpften Endabschnitt 19 bzw. 20 ist stirnseitig - im Fall einer gezogenen Achse vorne und im Fall einer geschobenen Achse hinten - am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinen achskörperseitigen Fuß 23 bzw. 24 kraftschlüssig und gegebenenfalls auch noch formschlüssig angeflanscht ist. Die Anlagefläche 21 bzw. 22 erstreckt sich dabei mit großer Breite vorzugsweise über die ganze am Starr-achskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Wie der Starrachskörper 3 sind auch die beiden Längslenker 4, 5 in die Stabilisatorfunktion eingebunden und dementsprechend ausgebildet. Die beiden jeweils als Gußteil, gegebenenfalls auch Schmiedeteil hergestellten und anschließend an bestimmten Stellen spanabhebend nach- bzw. endbearbeiteten Längslenker 4, 5 sind demzufolge in der Vertikalen vergleichsweise biegesteif, um ihre Längsachse aber begrenzt tordierbar ausgebildet. Generell sind die beiden Längslenker 4, 5 in diesem Fall hinsichtlich ihrer Biegesteifigkeit und Torsionsfähigkeit auf den Gesamtstabilisierungseffekt in Verbindung mit dem torsionsfähigen Starrachskörper 3 abgestimmt, und zwar über entsprechende Bemessung und Formgebung ihrer Querschnitte. Im dargestellten Beispiel weist jeder der beiden gleich langen Längslenker 4, 5 zwischen seinem Fuß 23 bzw. 24 und einem andernendes vorhandenen Lagerauge 26 bzw. 27 einen stabförmigen Bereich mit einem sich über die Länge größenmäßig ändernden, zu dem Lagerauge 26 bzw. 27 hin kleiner werdenden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie jeweils an den rahmenfest angebrachten Multifunktionslagerschilden 16 bzw. 17 angelenkt sind, kleiner ist als der Abstand ihrer achskörperseitigen Füße 23 bzw. 24. Wenn die erfindungsgemäße Starrachse in das Fahrzeug eingebaut ist, verlaufen die beiden Längslenker 4, 5 - von der Seite her betrachtet - vom Starrachskörper 3 ausgehend schräg nach oben gerichtet zu den rahmenseitigen Multifunktionslageschilden 16 bzw. 17 hin.

Die erfindungsgemäße Starrachse ermöglicht einen für ein Nutzfahrzeug sehr hohen Fahr- und Federungskomfort. Dieser erreicht ein Optimum, wenn die größtmögliche Federspur festgelegt ist, das heißt, jedes der beiden Federbeine 6 bzw. 9 an seinem unteren Ende beispielsweise über ein in ein dortiges Lagerauge 28 bzw. 29 eingebautes Pratzengelenk 30 bzw. 31 an einer achskörperfesten Lagerstelle angelenkt ist, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und jeweils durch einen am Starrachskörper 3 angebauten oder mitangeformten maulartigen Bock 32 bzw. 33 gebildet ist Zu diesem hohen Fahr- und Federungskomfort trägt auch bei, daß die beiden Federbeine 6 bzw. 9 - von vorne gesehen - gepfeilt zueinander eingebaut sind, derart, daß ihre oberen Enden 36 bzw. 37 weniger weit voneinander beabstandet sind als ihre untenendigen Lageraugen 28 bzw. 29. Von der Seite her gesehen steht jedes Federbein 6 bzw. 9 entweder vertikal oder, je nach dem, ob es sich um eine geschobene oder - wie dargestellt - gezogene Starrachse handelt, leicht nach vorn oder hinten geneigt.

Mit seinem oberen Ende 36 bzw. 37 ist jedes Federbein 6 bzw. 9 räumlich oberhalb und seitlich außerhalb des benachbarten Rahmenlängsträgers 1 bzw. 2 an einem der beiden Federbeinhalter 12 bzw. 13 abgestützt und befestigt. Die beiden Federbeinhalter 12 bzw. 13 bilden zusammen mit der Quertraverse 14 einen - von vorne gesehen - U-förmigen Querträger 38, der mit seiner Quertraverse 14 den Starrachskörper 3 und den Panhardstab 15 oben mit geringem Abstand dachbildend überbrückt und außerdem die beiden Rahmen-Längsträger 1, 2 stabilisierend miteinander verbindet.

Innerhalb des Querträgers 38 ist die Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen schräg hochgezogenen Endabschnitt 40 bzw. 41 aufweist. Dessen äußere Enden sind nach Art eines Maules ausgebildet, mit dem der anzuschließende Federbeinhalter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vom und hinten zugehörige Anlageflächen 48, 49 bzw. 50, 51 zugeordnet sind. Im Bereich dieser Anlageflächen 48, 49 bzw. 50, 51 ist die Quertraverse 14 mit ihren Wangen 44, 45 bzw. 46, 47 abgestützt und dort durch entsprechende Bohrungen bzw. Löcher 52 durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner Luft- oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen 62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchern 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Einem der beiden Federbeinhalter 12 bzw. 13 ist erfindungsgemäß über seine eigentliche Funktion hinaus eine weitere Funktion aufgeprägt, nämlich jene, das Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 z. B. über ein in sein einenendiges Lagerauge 76 eingebautes Pratzengelenk 77 abgestützt und mittels Schrauben 78 befestigt ist.

Mit seinem anderen, gegenüberliegenden Ende ist der Panhardstab 15 z. B. über ein in das dortige Lagerauge 79 eingebautes Pratzengelenk 80 an einem achsführenden Längslenker 4 bzw. 5 angelenkt. Als Anlenkorgan hierfür ist ein angebauter oder mitangeformter Anschlußbock vorgesehen, an dem eine entsprechende Anlagefläche und Gewindebohrungen für die Anschraubung des Pratzengelenkes 80 angearbeitet sind. Im dargestellten Beispiel ist am Längslenker 5 ein seitlich nach innen vorspringender maulartiger Lagerbock 81 mitangeformt, der eine äußere stirnseitige Anlagefläche und zwei interne Sackgewindelöcher für die Abstützung des Pratzengelenkes 80 und dessen Befestigung mittels Schrauben 82 aufweist. Der als im wesentlichen gerader Stab mit den endseitig angeschmiedeten Lageraugen 76, 79 ausgebildete Panhardstab 15 erstreckt sich aufgrund seiner wie vorstehend beschriebenen Anlenkung annähernd parallel oder leicht schräg zum Mittelbereich 18 des Starrachskörpers 3 verlaufend.

Die beiden Multifunktionslagerschilde 16, 17 weisen jeweils einen zur Fahrzeugmitte hin abragenden Vorsprung 83 bzw. 84 auf, in dessen von außen freiem Innenraum eine Anlenkstelle für die Starrachse gegeben ist, und zwar in Form einer Anlagefläche und einer Querbohrung 85, in die bei Montage ein das vordere Längslenker-Lagerauge 26 bzw. 27 durchdringender Lagerbolzen eingebaut und anschließend jede dieser beiden Lagerstellen von außen her durch einen mittels mehrerer Schrauben 86 am Multifunktionslagerschild 16 bzw. 17 befestigten Deckel 87 gesichert wird.

## Patentansprüche

1. Fahrgestell eines schweren Nutzfahrzeuges, mit einem Rahmen, dessen beide Längsträger (1, 2) über mehrere Querträger miteinander verbunden sind, und mit mehreren Achsen, von denen wenigstens eine eine Starrachse ist, zu deren Längsführung wenigstens zwei Längslenker (4, 5) und zu deren Querführung ein Panhardstab (15) vorgesehen sind, **dadurch gekennzeichnet, dass** die Federung und Aufhängung der Starrachse folgende weitere Elemente aufweist, nämlich
a) je Achsseite ein aus einer Luft- oder Schraubenfeder (7, 10) und einem hierzu koaxialen Stoßdämpfer (8, 11) bestehendes Federbein (6, 9), und
b) je Achsseite einen an einem Rahmenlängsträger(1, 2) befestigten Federbeinhalter (12, 13), an dem das zugehörige Federbein (6, 9) mit seinem oberen Ende (36, 37) fixiert ist, während das untere Federbein-Ende (28, 29) an einer Anlenkstelle (32, 33) am Starrachskörper (3) angeschlossen ist,
und dass der zur Querführung der Starrachse vorgesehene Panhardstab (15)
- einenendes an einem auch zu diesem Zweck entsprechend ausgebildeten Federbeinhalter (12, 13) und
- andernendes an einem am Starrachskörper (3) angeschlossenen achsführenden Längslenker (4, 5) angelenkt ist.

2. Fahrgestell nach Anspruch 1, **dadurch gekennzeichnet, daß** die Starrachse nach Art einer selbststabilisierenden Verbundlenkerachse ausgebildet ist, demzufolge die Funktion eines das Wanken des Nutzfahrzeuges begrenzenden Stabilisators einem Bauteilverbund aufgeprägt ist, der aus dem Starrachskörper (3) und zwei fest an diesem angeschlossenen Längslenkern (4, 5) besteht, wobei
- - die beiden Längslenker (4, 5) weit voneinander beabstandet jeweils stirnseitig vorn oder hinten am Starrachskörper mittels Schrauben (25) kraft- und gegebenenfalls auch formschlüssig angeflanscht sind,
- der Starrachskörper (3) in einem geraden Mittelbereich (18) zwischen den angeschlossenen Längslenkern (4, 5) definiert torsionsfähig ausgebildet ist,
- die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (3) abgestimmt sind durch entsprechende Bemessung und Formgebung der hierfür maßgeblichen Querschnitte, und
- diese Verbundlenkerachse mit den freien Enden ihrer beiden Längslenker (4, 5) an rahmenfesten Lagerstellen (16, 17) angelenkt ist.

3. Fahrgestell nach einem der vorhergehenden Ansprüche, **dadurch gekennzeichnet, daß** jeder Federbeinhalter (12, 13) zumindest in seinem oberen Bereich nach Art einer nach außen offenen Halbschale (54, 55) ausgebildet ist, von deren Begrenzungswand (56, 57) das zugehörige Federbein (6, 9) im Bereich seiner Luft- oder Schraubenfeder (7, 10) radial außen mit geringem Abstand von innen her partiell überdeckt wird und an deren Kopfplatte (58, 59) das jeweilige Federbein (6, 9) obenendig abgestützt und mittels je zwei Löcher (60, 61) durchdringenden Verschraubungen (62, 63) befestigt ist, wobei ein Zentralloch (64, 65) in der Federbein-Kopfplatte (58, 59) zur Zentrierung des jeweiligen Federbeines (12, 13) und freien Durchtritt von dessen oberem Ende (36, 37) dient.

4. Fahrgestell nach Anspruch 3, **dadurch gekennzeichnet, daß** jeder Federbeinhalter (12, 13) etwa in seinem mittleren Höhenbereich einen außenseitig an der Halbschale (54, 55) anschließenden Anschlußflansch (66, 67) mit mehreren Schraubenlöchern (68, 69) aufweist, daß dieser Anschlußflansch (66, 67) etwa im gegeben ist, und daß jeder Federbeinhalter (12, 13) mit seinem Anschlußflansch (66, 67) über die Schraubenlöcher (68, 69) und hierzu längsträgerintern fluchtende Löcher durchdringende Schrauben (70) und zugehörigen Muttern am jeweiligen Rahmen-Längsträger (1, 2) angeflanscht befestigt ist.

5. Fahrgestell nach einem der vorgegebenen Ansprüche, **dadurch gekennzeichnet, daß** die beiden Federbeinhalter (12, 13) jeweils durch ein Stahlgußteil realisiert sind, das nach dem Abguß an erforderlichen Stellen spanabhebend nach- bzw. endbearbeitet wird und an geeigneten Stellen Durchbrüche (71, 72) zur Gewichtsreduzierung aufweist.

6. Fahrgestell nach einem der vorhergehenden Ansprüche, **dadurch gekennzeichnet, daß** einer der beiden Federbeinhalter (12, 13), um als Abstütz-, Halte- und Anlenkorgan für den Panhardstab (15) herangezogen werden zu können, nach unten durch ein Lagerschild (73) verlängert ist, an dessen unterem Ende ein Maul und beiderseits desselben je ein Lagerauge (74, 75) ausgebildet sind, an denen der Panhardstab (15) über ein in ein an einem Ende gegebenes Lagerauge (76) eingebautes Pratzengelenk (77) und zugehörige Schrauben (78) befestigbar ist.

7. Fahrgestell nach Anspruch 6, **dadurch gekennzeichnet, daß** der Panhardstab (15) an seinem anderen, gegenüber liegenden Ende über ein in das dortige Lagerauge (79) eingebautes Pratzengelenk (80) an einem Lagerbock (81) angeschlossen ist, der an den auf dieser Achsseite am Starrachskörper (3) angeschlossenen Längslenker (4 bzw. 5) entweder mitangeformt oder dort angebaut ist und an dem eine entsprechende Anlagefläche und Gewindebohrungen für die Anschraubung des Pratzengelenkes (80) mittels Schrauben (82) vorgesehen sind.

8. Fahrgestell nach einem der vorhergehenden Ansprüche, **dadurch gekennzeichnet, daß** die beiden Federbeinhalter (12, 13) die beiden Seitenteile eines - von vorne gesehen - U-förmigen Querträgers (38) bilden, der die beiden Rahmen-Längsträger (1, 2) stabilisierend miteinander verbindet und als drittes Teil noch eine Quertraverse (14) aufweist, die durch ein im Querschnitt hutförmiges Blechpreßteil, gegebenenfalls auch Schmiede- oder Gußteil gebildet ist, das einen geraden Mittelabschnitt (39) und beiderseits derselben je einen schräg hochgezogenen Endabschnitt (40, 41) mit einem nach Art eines Maules ausgebildeten äußeren Ende aufweist, von dem jeweils ein anzuschließender Federbeinhalter (12, 13) außen übergriffen wird in dessen Bereich befestigt ist.

9. Fahrgestell nach Anspruch 8, **dadurch gekennzeichnet, daß** jedes Maul an der Quertraverse (14) durch einen Ausschnitt (42, 43) in dessen Obergurt und beiderseits jedes Ausschnitts (42, 43) verbleibende Wangen (44, 45; 46, 47) gebildet ist, denen am jeweiligen Federbeinhalter (12, 13) vom und hinten zugehörige Anlageflächen (48, 49; 50, 51) zugeordnet sind, in deren Bereich die Quertraverse (14) mit ihren Wangen (44, 45; 46, 47) abgestützt und dort durch entsprechende Bohrungen bzw. Löcher (52) durchdringende Schrauben (53) mit den Federbeinhaltern (12, 13) fest verbunden ist.

10. Fahrgestell nach einem der vorhergehenden Ansprüche, **dadurch gekennzeichnet, daß** die je Achsseite eine Anlenkstelle (32, 33) für das untere Ende (28, 29) eines Federbeines (6, 9) am Starrachskörper (3) so weit wie möglich zu einem außenendigen Radträger-Anschlußkopf (34, 35) hingerückt angeordnet ist, daß sich eine größtmögliche Federspur und eine - von vorne gesehen - gepfeilte Anordnung der beiden Federbeine (6, 9) ergibt, bei der die oberen Enden (36, 37) derselben weniger weit voneinander beabstandet sind als deren untere Enden (28, 29).

11. Fahrgestell nach einem der vorhergehenden Ansprüche, **dadurch gekennzeichnet, daß** jedes der beiden Federbeine (6, 9) - von der Seite her gesehen - entweder vertikal oder leicht nach vorn oder hinten geneigt angeordnet ist.

12. Fahrgestell nach einem der vorhergehenden Ansprüche, **dadurch gekennzeichnet, daß** jedes der beiden Federbeine (6, 9) an seinem unteren Ende über ein in ein dortiges Lagerauge (28, 29) eingebautes Pratzengelenk (30, 31) an einer achskörperfesten Lagerstelle angelenkt ist, die durch am Starrachskörper (3) so weit wie möglich zu jeweils einem achskörperendigen Radträger-Anschlußkopf (34, 35) hingerückt mitangeformte und entsprechend spanabhebend nachbearbeitete Vorsprünge (32, 33) gebildet ist.

## Claims

1. Chassis of a heavy-duty commercial vehicle with a frame whose two longitudinal members (1, 2) are connected with each other by means of several cross members, and with several axles, of which at least one is a rigid axle for whose longitudinal location at least two longitudinal arms (4, 5) and for whose transverse location a Panhard rod (15) is provided, **characterised in that** the suspension and mounting of the rigid axle shows the following elements, namely:
a) a spring strut (6, 9) provided on each axle side and consisting of an air or coil spring (7, 10) and of a shock absorber (8, 11) arranged coaxially to said air or coil spring (6, 9), and
b) a spring-strut holder (12, 13) provided on each axle side and fastened to a frame longitudinal member (1, 2), to which holder (12, 13) the upper end (36, 37) of the associated spring strut (6, 9) is fastened, while the lower spring-strut end (28, 29) is connected to a location point (32, 33) on the rigid axle body (3),
and that the Panhard rod (15) provided for transverse location of the rigid axle
• is, at one end, located on a spring-strut holder (12, 13) suitably designed for this purpose and,
• at its other end, on an axle-locating longitudinal arm (4, 5) connected to the rigid axle body (3).

2. Chassis according to Claim 1, **characterised in that** the rigid axle is designed as a self-stabilising twist-beam axle, by virtue of which the function of a stabiliser limiting the rolling motion of a commercial vehicle is invested in a component assembly consisting of a rigid-axle body (3) and of two longitudinal arms (4, 5) firmly linked to said rigid-axle body (3),
• the two longitudinal arms (4, 5) being spaced a large distance apart and the front face of each of them being flanged on to the front or rear side of the rigid-axle body in a non-positive and, if necessary, in a positive connection by means of bolts (25),
• the rigid-axle body (3) being defined as being torsion-capable in a straight centre area between the two longitudinal arms (4, 5) connected up,
• the two longitudinal arms (4, 5), if viewed in vertical direction, being designed as having comparative flexural resistance but limited torsional capability about the longitudinal axis and, in respect of their flexural resistance and torsional capability, being adapted to the overall stabilising effect in conjunction with the torsion-capable rigid-axle body (3) through the suitable dimensioning and forming of the cross-sections decisive for this, and
• this twist-beam front axle being located on frame-mounted bearing points (16, 17) at the free ends of its two longitudinal arms (4, 5),

3. Chassis according to one of the foregoing Claims, **characterised in** each of the spring-strut holders (12, 13) is, at least in its upper area, designed as a half shell (54, 55) open towards the outside, of whose limiting wall (56, 57) the associated spring strut (6, 9) is, in the area of its air or coil spring (7, 10), partially covered radially on the outside and at little distance from the inside, on the head plate (58, 59) of which limiting wall (56, 57) the upper end of each spring strut (6, 9) is supported and fastened by means of bolted connections (62, 63), each passing through two holes (60, 61), a central hole (64, 65) in the spring-strut head plate (58, 59) being provided for centring each spring strut (12, 13) and the free passage of its upper end (36, 37).

4. Chassis according to Claim 3, **characterised in that** each spring-strut holder (12, 13) has, on its outside, a connecting flange (66, 67) approximately halfway up, which flange (66, 67) is adjacent to the half shell (54, 55), provided with several bolt holes (68, 69) and arranged approximately in the thrust centre and that each spring-strut holder (12, 13) is flanged on to the respective frame longitudinal member (1, 2) by its connecting flange (66, 67) with the aid of bolts (70) passing through bolt holes (68, 69) and holes aligned to these on the inside of the longitudinal members and with the aid of associated nuts.

5. Chassis according to one of the foregoing Claims, **characterised in that** each of the two spring-strut holders (12, 13) is provided in the form of a cast steel part which, after the casting, is machined and finished at the points necessary and has openings (71, 72) at suitable points for reduction in weight.

6. Chassis according to one of the foregoing Claims, **characterised in that** for use as a supporting, holding and locating organ for the Panhard rod (15) one of the two spring-strut holders (12, 13) is extended downwards by means of a bearing plate (73) at whose lower end a jaw and a bearing eye (74, 75) at both sides of said jaw are provided, to which bearing eyes (74, 75) the Panhard rod (15) can be fastened by means of a claw-type joint (77) installed in a bearing eye (76) arranged at one end and by means of associated bolts (78).

7. Chassis according to Claim 6, **characterised in that** the other, opposite end of the Panhard rod (15) is connected to a bearing block (81) by means of a claw-type joint (80) installed in a bearing eye (79) provided there, which bearing block (81) is either an integral part of the longitudinal arm (4, 5) provided on this axle side and connected to said rigid axle body (3) or is attached there and provided with a suitable contact face and with threaded bores for the fastening of the claw-type joint (80) by means of bolts (82).

8. Chassis according to one of the foregoing Claims, **characterised in that** the two spring-strut holders (12, 13) form the two side parts of - if viewed from the front - an U-shaped cross member (38) which connects the two frame longitudinal members (1, 2) with each other in a stabilising manner and has as a third part yet another transverse beam (14) which is a pressed sheet-metal part or, if necessary, a forged or cast part with hat-shaped cross-section that has a straight centre area (39) and, at both ends of said straight centre area (39), is provided with an obliquely upward-curved end section (40, 41) with an outer end which is designed as a jaw and covers in each case the outside of a spring-strut holder (12, 13) to be connected up and in whose area the spring strut holder (12, 13) is fastened.

9. Chassis according to Claim 8, **characterised in that** each jaw on the transverse beam (14) is formed by a cutout (42, 43) in the upper flange of said jaw and by webs (44, 45, 46, 47) at both sides of each cutout (42, 43), to which webs (44, 45, 46, 47) contact faces (48, 49, 50, 51) on the front and rear sides of the respective spring-strut holder (12, 13) are assigned, in the area of which contact faces (48, 49, 50, 51) the transverse beam (14) is supported by its webs (44, 45, 46, 47) and firmly connected with the spring-strut holders (12, 13) by means of bolts (53) passing through corresponding bores and bolt holes (52) provided in said contact faces (48, 49, 50, 51).

10. Chassis according to one of the foregoing Claims, **characterised in that** on each axle side the one location point (32, 33) on the rigid-axle body (3) for the lower end (28, 29) of the spring strut (6, 9) is arranged as far as possible towards a wheel-carrier connecting head (34, 35) at the outer end of said rigid-axle body (3), that the spring track is as large as possible and the two spring struts (6, 9), if viewed from the front, are in convergent arrangement, the upper ends (36, 37) of said spring struts (6, 9) being less far apart than their lower ends (28, 29).

11. Chassis according to one of the foregoing Claims, **characterised in that** each of the two spring struts (6, 9), if viewed from the side, is arranged either vertically or slightly inclined towards the front or the rear.

12. Chassis according to one of the foregoing Claims, **characterised in that** each of the two spring struts (6, 9) is located on an axle-body-mounted bearing point via a claw-type joint (30, 31) installed in a bearing eye (28, 29) arranged at the lower end of said spring strut (6, 9), which axle-body-mounted bearing point is formed by protrusions (32, 33) constituting an integral part of said axle-body-mounted bearing point, arranged as far as possible towards each wheel-carrier connecting head (34, 35) at the outer end of said rigid-axle body (3), and suitably machined in a subsequent finishing process.

## Revendications

1. Châssis de véhicule utilitaire lourd comportant un cadre dont les deux longerons (1, 2) sont reliés par plusieurs traverses ainsi que plusieurs essieux dont au moins l'un est un essieu rigide dont le guidage longitudinal est assuré par au moins deux bras longitudinaux (4, 5) et une barre Panhard (15) pour le guidage transversal,
**caractérisé en ce que**
les moyens de suspensions et d'accrochage de l'essieu rigide comprennent les autres éléments suivants :
a) de chaque côté de l'essieu une jambe à ressort(6, 9) formée d'un ressort pneumatique ou hélicoïdal (7, 10) et d'un amortisseur (8, 9) coaxial à celui-ci,
b) pour chaque côté de l'essieu, un support de jambe de ressort (12, 13) fïxé à un longeron (1, 2) auquel est fixé la jambe de ressort correspondante (6, 9) par son extrémité supérieure (36, 37) alors que la jambe de ressort inférieur (28, 29) est reliée à un point d'articulation (32, 33) du corps d'essieu rigide (3),
et **en ce que** la barre de Panhard (15), assurant le guidage transversal de l'essieu rigide,
- est articulée à une extrémité à un support de jambe de ressort (12, 13) correspondant réalisé à cet effet et
- à l'autre extrémité elle est articulée à un bras longitudinal (4, 5) de guidage d'essieu, relié à l'essieu rigide (3).

2. Châssis selon la revendication 1,
**caractérisé en ce que**
l'essieu rigide est réalisé à la manière d'un essieu à bras composite autostabilisé et ainsi il assure la fonction d'un stabilisateur limitant le roulis du véhicule selon une construction composite, formée du corps (3) de l'essieu rigide et de deux bras longitudinaux (4, 5) reliés solidairement à celui-ci, et
- les deux bras longitudinaux (4, 5) sont écartés l'un de l'autre en étant reliés par bride chaque fois du côté frontal à l'avant et à l'arrière au corps d'essieu rigide par des vis (25) suivant une liaison par la force et le cas échéant par la forme,
- le corps d'essieu rigide (3) est susceptible d'un mouvement de torsion défini dans une zone centrale (18) droite entre les bras longitudinaux (4, 5) une fois reliés,
- les deux bras longitudinaux (4, 5) sont relativement rigides en flexion dans la direction verticale mais peuvent effectuer un mouvement de torsion limité autour de leur axe longitudinal et du point de vue de leur rigidité en flexion et de leur aptitude à la torsion ils sont accordés sur l'effet de stabilisation globale en liaison avec le corps d'essieu rigide (3) susceptible de torsion par un dimensionnement et une mise en forme correspondante des sections déterminantes pour cela et
- cet essieu à bras composites est articulé par l'extrémité libre de ses deux bras longitudinaux (4, 5) au point de palier (16, 17) solidaire du cadre.

3. Châssis selon l'une quelconque des revendications précédentes,
**caractérisé en ce que**
chaque support de jambe de ressort (12, 13) est réalisé en forme d'une demi-coquille ouverte vers l'extérieur (54, 55) au moins dans sa partie supérieure, et la paroi limite (56, 57) de ces demi-coquilles couvre au moins partiellement la jambe de ressort correspondante (6, 9) au niveau de son ressort pneumatique ou hélicoïdal (6, 10) radialement vers l'extérieur avec une faible distance et la jambe de ressort (6, 9) s'appuie par son extrémité supérieure contre la plaque de tête (58, 59), en étant fixée à l'aide de vis (62, 63) traversant chaque fois deux trous (60, 61), un orifice central (64, 65) réalisé dans la plaque de tête de la jambe de ressort (58, 59) servant au centrage de la jambe de ressort respective (12, 13) et au passage libre de son extrémité supérieure (36, 37).

4. Châssis selon la revendication 3,
**caractérisé en ce que**
chaque support de jambe de ressort (12, 13) comporte plusieurs trous à vis (68, 69) dans une bride de raccordement (66, 67) prévue au niveau de sa mi-hauteur, adjacente d côté extérieur à la demi-coquille (54, 55), et cette bride de raccordement (66, 67) se trouve sensiblement au point médian de poussée et
chaque support de jambe à ressort (12, 13) est fixé par bride avec sa bride de branchement (66, 68) par des vis (70) traversant les trous de vis (68, 69) et les trous alignés, internes aux longerons et les écrous correspondants sur le longeron respectif (1, 2) du cadre.

5. Châssis selon l'une quelconque des revendications précédentes,
**caractérisé en ce que**
les deux supports de jambe à ressort (12, 13) sont réalisés chaque fois sous la forme d'une pièce en fonte d'acier qui, après sa coulée, est usinée aux endroits appropriés par enlèvement de copeaux et usinage de finition et aux endroits appropriés elle comporte des passages (71, 72) pour réduire le poids.

6. Châssis selon l'une quelconque des revendications précédentes,
**caractérisé en ce que**
l'un des deux supports de jambe à ressort (12, 13) est utilisé comme organe d'appui, de maintien et d'articulation de la barre Panhard (15) en étant prolongé vers le bas par un panneau de palier (73) dont l'extrémité inférieure comporte une mâchoire et de part et d'autre de celle-ci un oeillet de palier (74, 75) auquel on peut fixer la barre Panhard (15) par une articulation à griffe (77) montée à un oeillet de palier (76) à l'extrémité correspondante et les vis appropriées (78).

7. Châssis selon la revendication 6,
**caractérisé en ce que**
la barre Panhard est reliée par son autre extrémité opposée, par une articulation à griffe (80) installée dans l'oeillet de palier (79) correspondant sur un bloc de palier (81) qui est soit formé sur le bras longitudinal (4, 5) relié de ce côté de l'essieu au corps d'essieu rigide (3) ou est monté sur cette extrémité et celle-ci comporte une surface d'appui correspondante et des taraudages pour fixer l'articulation à griffe (20) à l'aide de vis (82).

8. Châssis selon l'une quelconque des revendications précédentes,
**caractérisé en ce que**
les deux supports de jambe à ressort (12, 13) forment les deux parties latérales d'une poutre transversale (38) à section U en vue de devant, reliée aux deux longerons (1, 2) du cadre pour les stabiliser et une troisième pièce étant une traverse (14) formée par une pièce en tôle emboutie à section en forme de chapeau ou le cas échéant une pièce forgée ou en fonte ayant une section médiane droite (39) et de part et d'autre de celle-ci chaque fois un segment d'extrémité (40, 41) relevé de manière inclinée avec une extrémité extérieure en forme de mâchoire, qui chevauche extérieurement chaque fois un support de jambe de ressort (12, 13) à relier en étant fixé dans cette zone.

9. Châssis selon la revendication 8,
**caractérisé en ce que**
chaque mâchoire de la traverse (14) est réalisée par une découpe (42, 43) de la ceinture supérieure et de part et d'autre de chaque découpe (42, 43) il subsiste des joues (44, 45 ; 46, 47) auxquelles sont associé, au niveau du support de jambe de ressort respectif (12, 13), des surfaces d'appui (48, 49, 50, 51) correspondantes à l'avant et à l'arrière et la traverse (14) s'appuie à cet endroit avec ses joues (44, 45, 46, 47) des perçages ou des trous (52) correspondants étant traversés par des vis (53) assurant la liaison solidaire avec les supports de jambe à ressort (12, 13).

10. Châssis selon l'une quelconque des revendications précédentes,
**caractérisé en ce que**
le point d'articulation (32, 33) de chaque côté de l'essieu pour l'extrémité inférieure (28, 29) d'une jambe à ressort (6, 7) est rentré aussi loin que possible par rapport à une tête de raccordement de support de roue (34, 35) à l'extrémité extérieure, au niveau du corps d'essieu rigide (3), pour avoir une trace de ressort aussi grande que possible et un montage incliné en vue de devant, des deux jambes de ressort (6, 7), l'extrémité supérieure (36, 37) des jambes de ressort étant moins écartée que leur extrémité inférieure (28, 29).

11. Châssis selon l'une quelconque des revendications précédentes,
**caractérisé en ce que**
chacune des deux jambes de ressort (6, 9), en vue de côté, est inclinée verticalement ou légèrement vers l'avant ou vers l'arrière.

12. Châssis selon l'une quelconque des revendications précédentes,
**caractérisé en ce que**
chacune des deux jambes de ressort (6, 9) est articulée au niveau de son extrémité inférieure par une articulation à griffe (30, 31) installée dans l'oeillet de palier correspondant (28, 29), l'articulation étant réalisée en un point d'articulation solidaire du corps d'essieu et ce point est formé sur le corps d'essieu rigide (3), en étant décalé autant que possible vers l'intérieur par rapport à une tête de raccordement de support de roue (34, 35) à l'extrémité du corps d'essieu et comporte des saillies (32, 33) usinées par enlèvement de copeaux.
